# EUROPEAN PATENT APPLICATION

(11) **EP 1 927 985 A2**
(43) Date of publication of application: **04.06.2008**
(21) Application number: 07113794.7
(22) Date of filing: 03.08.2007
(51) Int. Cl.: G11B 19/02, G06F 3/06

(54) **Information processing apparatus**

(30) Priority: 30.11.2006 JP 2006324995
(71) Applicant: KABUSHIKI KAISHA TOSHIBA, Tokyo 105-8001 (JP)
(72) Inventor: Tsuji, Hiroyuki Toshiba Corporation, Tokyo (JP)
(74) Representative: Henkel, Feiler & Hänzel

(57) **Abstract**

According to one embodiment, an information processing apparatus (10) includes a main body (11), a display panel (12), a position sensor (122), a disk drive (113) and a controller (201). The display panel is rotatably attached to the main body between a close position and an open position. The position sensor detects a position of the display panel. The disk drive includes a nonvolatile memory (203) and a disc medium (202). The controller sets the disk drive to a first mode when the display panel is in the open position and a second mode when the display panel is in the close position. In the first mode, an access to the disc medium is permitted. In the second mode, the access to the disc medium is inhibited and the nonvolatile memory temporary stores the data input to the disk drive.

## Description

### CROSS-REFERENCE TO RELATED APPLICATIONS

This application is based upon and claims the benefit of priority from Japanese Patent Application No. 2006-324995, filed November 30, 2006, the entire contents of which are incorporated herein by reference.

### BACKGROUND

### 1. Field

An aspect of the present invention relates to disk protection technology applied to an easily portable and battery-powerable information processing apparatus, for example, a notebook personal computer.

### 2. Description of the Related Art

In recent years, easily portable and battery-powerable personal computers called notebook personal computers have been in widespread use. Generally, the information processing apparatuses, such as the notebook personal computer, employ hard disk drives as storage devices. Hard disk drives are storage devices configured to store data in a disk storage medium called a hard disk.

Disk storage media respectively incorporated in hard disk drives are low in vibration-resistance and impact-resistance, as compared with semiconductor memory devices. JP-A-2005-242716 discloses techniques of protecting disk storage media from vibrations and impacts.

Meanwhile, recently, along with proliferation of the Internet, e-mails have become major information transmission means. Thus, mailers have been developed, which have the functions of periodically checking the presence/absence of incoming e-mails thereto and automatically fetching, in a case where the incoming e-mails are present, the e-mails from a mail server.

Consequently, conventional measures adapted to inhibit accesses to hard disk drives without exception even in a state, in which a disk storage media should be protected from vibrations and impacts, have become unfit for information processing apparatuses loaded with the mailers.

### SUMMARY

According to an aspect of the present invention, there is provided an information processing apparatus including a main body, a display panel, a position sensor, a disk drive and a controller. The display panel is rotatably attached to the main body between a close position in which the display panel covers the main body and an open position in which the display panel is risen relative to the main body. The position sensor detects a position of the display panel. The disk drive stores data input thereto and includes a nonvolatile memory that buffers the data input to the disk drive and a disc medium that stores the data buffered by the nonvolatile memory. The controller sets the disk drive to a first mode that the display panel is in the open position and a second mode when the position sensor detects that the display panel is in the close position. In the first mode, an access to the disc medium is permitted. In the second mode, the access to the disc medium is inhibited and the nonvolatile memory temporary stores the data input to the disk drive.

The disc medium may include a disk on which the data is written. The controller may control the disk to stop when the disk drive is set to the second mode.

The controller may control the disk drive to reflect the data that is temporally stored in the nonvolatile memory to the disc medium when the disk drive is set from the second mode to the first mode.

Also, according to another aspect of the present invention, there is provided an information processing apparatus including an acceleration sensor, a disk drive and a controller. The acceleration sensor detects an acceleration. The disk drive stores data input thereto and includes a nonvolatile memory that buffers the data input to the disk drive and a disc medium that stores the data buffered by the nonvolatile memory. A controller that sets the disk drive to a first mode when the acceleration detected by the acceleration sensor is equal to or less than a predetermined value and a second mode when the acceleration detected by the acceleration sensor exceeds the predetermined value. In the first mode, an access to the disc medium is permitted. In the second mode, the access to the disc medium is inhibited and the nonvolatile memory temporary stores the data input to the disk drive.

The disc medium may include a disk on which the data is written. The controller may control the disk to stop when the disk drive is set to the second mode.

The controller may control the disk drive to reflect the data that is temporally stored in the nonvolatile memory to the disc medium when the disk drive is set from the second mode to the first mode.

Also, according to still another aspect of the present invention, there is provided an information processing apparatus including a battery, a charge sensor, a disk drive and a controller. The charge sensor detects a charged amount of the battery. The disk drive stores data input thereto and includes a nonvolatile memory that buffers the data input to the disk drive and a disc medium that stores the data buffered by the nonvolatile memory. The controller sets the disk drive to a first mode when the charged amount detected by the charge sensor exceeds a predetermined value and a second mode when the charged amount detected by the charge sensor is equal to or less than the predetermined value. In the first mode, an access to the disc medium is permitted. In the second mode, the access to the disc medium is inhibited and the nonvolatile memory temporary stores the data input to the disk drive.

The disc medium may include a disk on which the data is written. The controller may control the disk to stop when the disk drive is set to the second mode.

The charge sensor may detect whether or not the battery is charged by an external power supply. The controller may set the disk drive to the first mode when the charge sensor detects that the battery is charged by the external power supply.

The controller may control the disk drive to reflect the data that is temporally stored in the nonvolatile memory to the disc medium when the disk drive is set from the second mode to the first mode.

According to one embodiment of the present invention, an information processing apparatus enabled to access a hard disk drive in a state, in which a disc medium medium should be protected from vibrations and impacts, without reducing vibration resistance and impact resistance is provided.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

FIG. 1 is an exemplary perspective view illustrating an external appearance of an information processing apparatus according to a first embodiment;

FIG. 2 is an exemplary view illustrating a system configuration of the information processing apparatus according to the first embodiment;

FIG. 3 is an exemplary flowchart illustrating the principle of an operation relating to the protection of a hard disk of the information processing apparatus according to the first embodiment;

FIG. 4 is an exemplary view illustrating a system configuration of the information processing apparatus according to a second embodiment;

FIG. 5 is an exemplary flowchart illustrating the principle of an operation relating to the protection of a hard disk of the information processing apparatus according to the second embodiment; and

FIG. 6 is an exemplary flowchart illustrating an example of application of the principle of an operation relating to the protection of a hard disk of the information processing apparatus according to each of the first and second embodiments.

### DETAILED DESCRIPTION

Various embodiments according to the invention will be described hereinafter with reference to the accompanying drawings. In general, according to one embodiment of the invention, an information processing apparatus includes a main body, a display panel, a position sensor, a disk drive and a controller. The display panel is rotatably attached to the main body between a close position in which the display panel covers the main body and an open position in which the display panel is risen relative to the main body. The position sensor detects a position of the display panel. The disk drive stores data input thereto and includes a nonvolatile memory that buffers the data input to the disk drive and a disc medium that stores the data buffered by the nonvolatile memory. The controller sets the disk drive to a first mode that the display panel is in the open position and a second mode when the position sensor detects that the display panel is in the close position. In the first mode, an access to the disc medium is permitted. In the second mode, the access to the disc medium is inhibited and the nonvolatile memory temporary stores the data input to the disk drive.

Hereinafter, embodiments of the invention are described with reference to the accompanying drawings.

First, a first embodiment of the invention is described below.

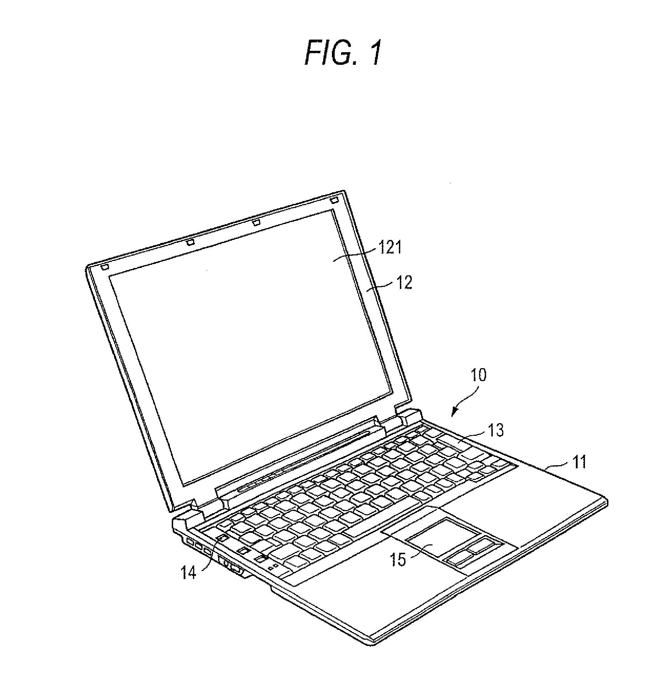

FIG. 1 is a perspective view taken from a front side of an information processing apparatus according to the first embodiment in a state in which a display unit is opened. The information processing apparatus is implemented as a battery-powerable portable notebook personal computer 10.

The computer 10 includes a main body 11 and a display panel 12. A display device including an LCD (Liquid Crystal Display) 121 is incorporated into the display panel 12. A display screen of the LCD 121 is placed at the substantially center of the display panel 12.

The display panel 12 is supported by and attached to the main body 11 rotatably between an open position, at which the top surface of the main body 11 is exposed, and a close position at which the top surface of the main body 11 is covered. The main body 11 has a thin box-shaped housing. A keyboard 13, a power button 14 serves as a power-on/power-off switch of the computer 10, and a touch pad 15 are disposed on the top surface of the main body 11.

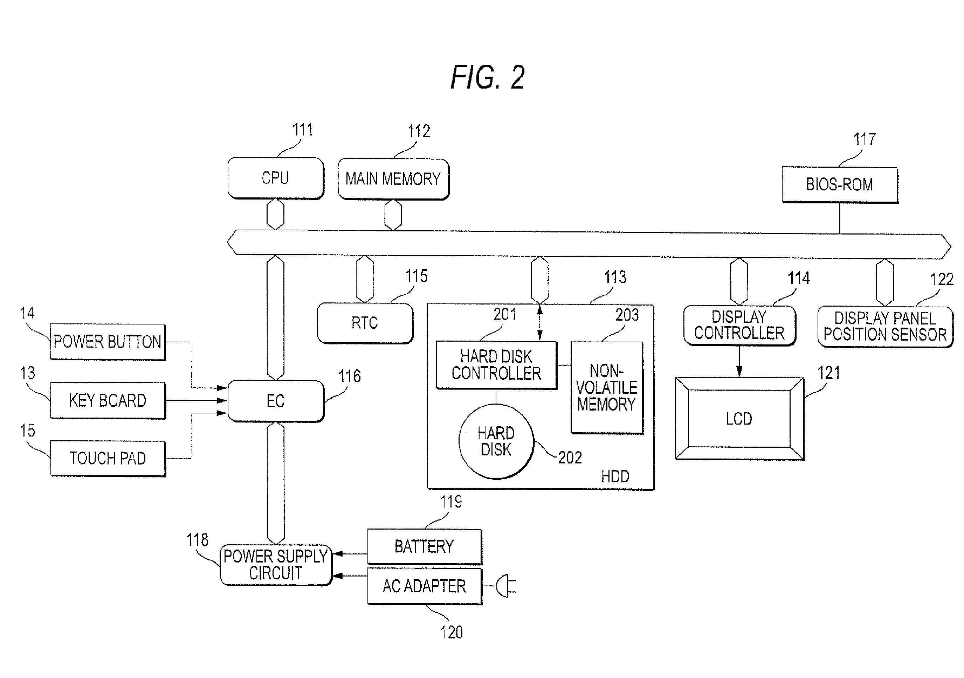

FIG. 2 illustrates a system configuration of the computer 10. As shown in FIG. 2, the computer 10 includes a CPU 111, a main memory 112, a hard disk drive (HDD) 113, a display controller 114, a real-time clock (RTC) 115, an embedded controller (EC) 116, a BIOS-ROM 117, a power supply circuit 118, a battery 119, and a display panel position sensor 122.

The CPU 111 is a processor that controls an operation of each component of the computer 10. The CPU 111 executes an operating system and various application programs loaded from the HDD 113 into the main memory 112. The CPU 111 executes BIOS stored in the BIOS-ROM 117. The BIOS is a program adapted to control hardware.

The HDD 113 of the computer 10 is a disk drive called a hybrid disk drive, and incorporates a hard disk controller 201, a hard disk 202, and a nonvolatile memory 203. The hard disk 202 is a disc medium medium. The hard disk controller 201 controls an operation of reading data from the hard disk 202 and an operation of writing data to the hard disk 202, according to a command supplied from the CPU 111. The operation of writing data to the hard disk 202 and that of reading data from the hard disk 202 are performed using a mechanical drive mechanism provided in the HDD 113. This drive mechanism includes a spindle motor causing the hard disk 202 to rotate, a head adapted to write and read data, and an actuator configured to move the head. As a result of writing and reading data through the use of such a mechanical drive mechanism, the hard disk 202 inevitably becomes low in vibration resistance and impact resistance. Thus, various countermeasures have been taken. For example, an access to the HDD is inhibited while the computer is carried.

On the other hand, recently, it has been frequent to use mailers which have the functions of periodically checking the presence/absence of incoming e-mails thereto and automatically fetching, in a case where the incoming e-mails are present, the e-mails from a mail server. Thus, a situation, in which it is necessary to access a HDD even while carrying a computer, has occurred. Accordingly, the embodiment is accomplished to enable an access to the HDD 113 in a HDD in a state, in which a hard disk 202 should be protected from vibrations and impacts, without reducing vibration resistance and impact resistance. Hereinafter, this respect is described in detail.

Incidentally, the display controller 114 is a controller that controls the LCD 121 used as a display monitor of the computer 10. The RTC 115 is a clock module (or timer) that measures an amount of time to give a date and time and that is always supplied with electric power from a battery for exclusive use by the RTC 115. The EC 116 is a controller that controls supply of electric power to each component of the system. The EC 116 is always supplied with electric power from the power supply circuit 118. The power supply circuit 118 supplies electric power to each component of the system under the control of the EC 116 by using electric power from the battery 119 provided in the main body 11 or electric power supplied from an external power supply through the AC adapter 120. Also, the display panel position sensor 122 is a sensor configured to detect that the position of the display panel 12 is changed from the open position to the close position, or vice versa.

It is now assumed that a user closes the display panel 12. When the display panel 12 is closed, there is a high likelihood that the computer 10 is carried. Thus, in the computer 10, the display panel position sensor 122 detects that the position of the display panel 12 is changed from the open position to the close position. Then, the display panel position sensor 122 sends the EC 116 a control signal indicating this change of the position of the display panel 12. On the other hand, the EC 116 having received the control signal generates an interruption so as to notify the CPU 111 of this change of the position of the display panel 12.

The hard disk controller 201 of the HDD 113 controls an operation of reading data from the hard disk 202 and an operation of writing data to the hard disk 202 according to a command supplied from the CPU 111, as described above. Additionally, at an access to the hard disk 202, the hard disk controller 201 uses the nonvolatile memory 203 as a buffer, if necessary. Hereinafter, this normal operation mode is referred to as a first operation mode.

When receiving a predetermined control command (command A) from the CPU 111, the first operation mode of the hard disk controller 201 is changed to another operation mode in which an access to the hard disk 202 is inhibited, and in which only an access to the nonvolatile memory 203 is performed. Hereinafter, this operation mode is referred to as a second operation mode. When the first operation mode is changed to the second operation mode, the hard disk controller 201 stops the entire mechanical drive mechanism including the spindle motor that rotates the hard disk 202, the head used to write and read data, and the actuator used to move the head.

Then, the EC 116 generates an interruption. Consequently, the CPU 111 detects that the display panel 12 is closed. Thus, the CPU 111 issues a command A to the hard disk controller 201 of the HDD 113 thereby to change the operation mode of the HDD 113 to the second operation mode. Even when the first operation mode is changed to the second operation mode, an access to the nonvolatile memory 203 is continued (all accesses to the HDD 113 are not allowed without exception). Therefore, mails newly arrived at this apparatus can be stored in the HDD 113. Also, an access to the hard disk 202 is inhibited. Consequently, the vibration resistance and the impact resistance are not reduced.

Next, it is now assumed that a user opens the display panel 12. Then, the display panel position sensor 122 detects that the position of the display panel 12 is changed from the close position to the open position. Thus, the display panel position sensor 122 sends the EC 116 a control signal indicating this change in the position of the display panel 12. On the other hand, the EC 116 having received this control signal generates an interruption to notify the CPU 111 of this change in the position of the display panel 12.

When receiving a predetermined control command (command B) from the CPU 111, the hard disk controller 201 resumes an operation of the mechanical drive mechanism including the spindle motor that rotates the hard disk 202, the head used to write and read data, and the actuator used to move the head to thereby a synchronization process of reflecting data, which is written only to the nonvolatile memory 203 in the second operation mode, to the hard disk 202. Thereafter, the hard disk controller 201 allows an access to the hard disk 202.

Then, the EC 116 generates an interruption. Consequently, the CPU 111 detects that the display panel 12 is opened. Thus, the CPU 111 issues a command B to the hard disk controller 201 of the HDD 113 thereby to change the operation mode of the HDD 113 to the first operation mode. Accordingly, the HDD 113 can be operated in the first operation mode, which is the normal operation mode, at a moment, at which the display panel 12 is opened, or later.

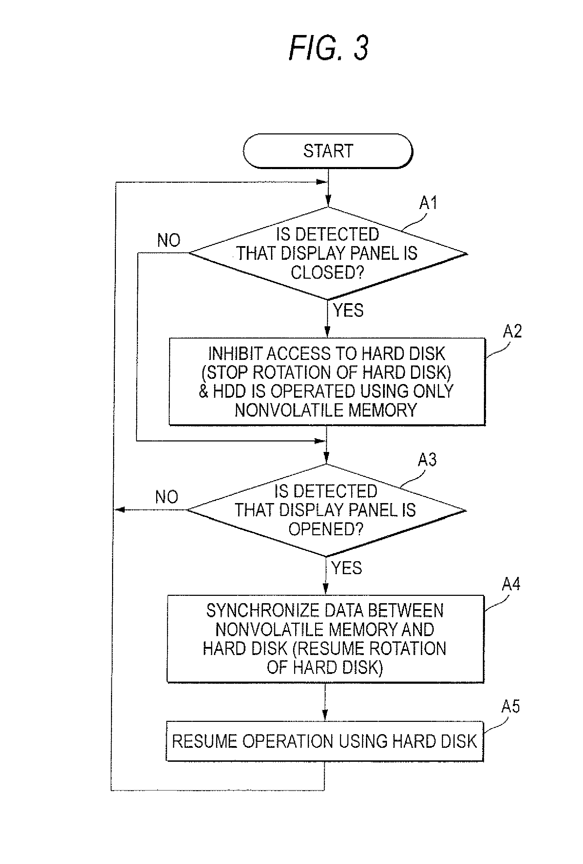

FIG. 3 is a flowchart illustrating the principle of an operation, which relates to the protection of the hard disk 202 of the computer 10 according to the first embodiment.

If the display panel 12 is closed (YES in step A1), this fact is detected by the display panel position sensor 122. Then, the display panel position sensor 122 transmits a signal indicating this fact to the CPU 111 through the EC 116.
Subsequently, the CPU 111 having been informed of the fact that the display panel 12 is closed inhibits an access to the hard disk 202. Also, the CPU 111 issues an instruction to the hard disk controller 201 in step A2 to operate using only the nonvolatile memory 203.

If the display panel 12 is opened (YES in step A3), this fact is detected by the display panel position sensor 122. Then, the display panel position sensor 122 transmits a signal indicating this fact to the CPU 111 through the EC 116.
Subsequently, the CPU 111 having been informed of the fact that the display panel 12 is closed synchronizes data between the nonvolatile memory 203 and the hard disk 202. Also, the CPU 111 issues an instruction to the hard disk controller 201 in steps A4 and A5 to return to an operation mode using an access to the hard disk 202.

Thus, the computer 10 can enable an access to the HDD 113 having been brought into a state, in which the hard disk 202 should be protected from vibrations and impacts, without reducing the vibration resistance and the impact resistance.

Next, a second embodiment of the invention is described below.

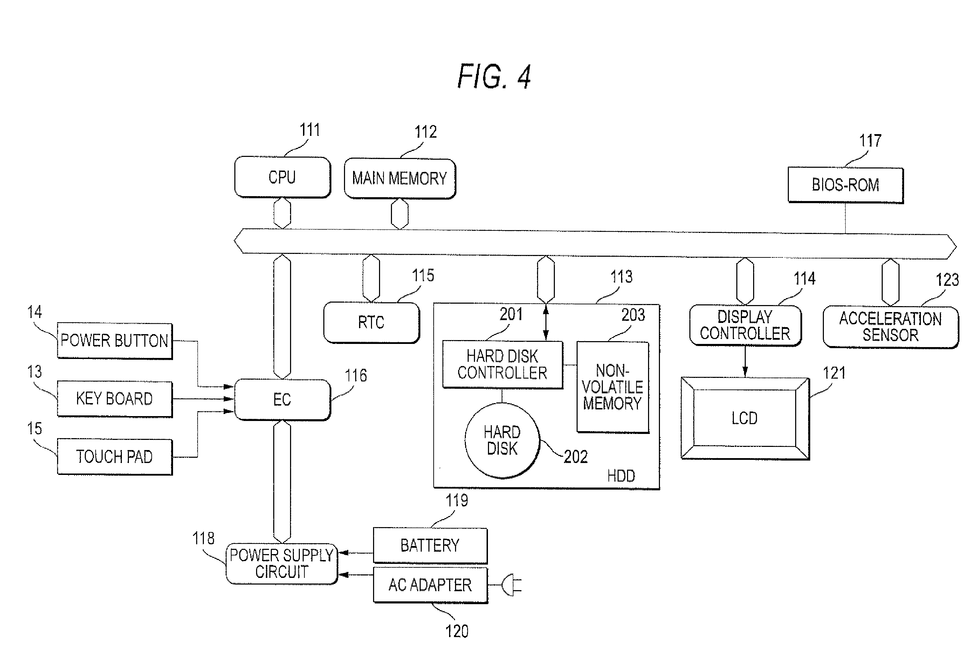

FIG. 4 illustrates a system configuration of a computer 10 according to a second embodiment. The configuration of the computer 10 according to the second embodiment differs from that of the computer 10 according to the first embodiment in that an acceleration sensor 123 is provided in the computer according to the second embodiment instead of the display panel position sensor 122.

In a case where the acceleration sensor 123 detects an acceleration having a certain magnitude, there is a high likelihood that the computer 10 is carried. Also, there is a high fear that the computer 10 undergoes vibrations and impacts. Thus, the computer 10 according to the second embodiment is adapted so that when the acceleration sensor 123 detects an acceleration having a certain magnitude, a control signal indicating the detection of the acceleration is sent to the EC 116. Subsequently, the EC 116 having received this control signal generates an interruption by following procedure similar to that followed by the computer 10 of the first embodiment to inform the CPU 111 of the detection of the acceleration. Consequently, the CPU 111 issues a command A to the hard disk controller 201 of the HDD 113 to thereby change the operation mode of the HDD 113 to the second operation mode.

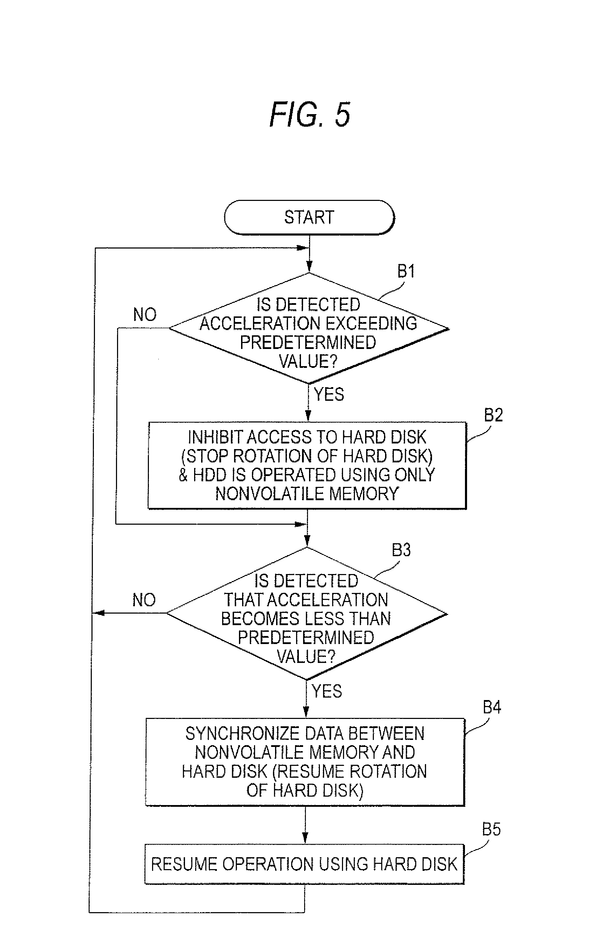

FIG. 5 is a flowchart illustrating the principle of an operation, which relates to the protection of the hard disk 202 of the computer 10 according to the second embodiment.

If an acceleration having a magnitude exceeding a predetermined value is detected by the acceleration sensor 123 (YES in step B1), a signal indicating the detection of this acceleration is transmitted to the CPU 111 through the EC 116. Then, the CPU 111 having been informed of the detection of the acceleration, whose magnitude exceeds the predetermined value, inhibits an access to the hard disk 202 and issues an instruction to the hard disk controller 201 in step B2 to operate using only the nonvolatile memory 203.

If the acceleration sensor 123 detects that the magnitude of the acceleration becomes equal to or less than the predetermined value (YES in step B3), a signal indicating this fact is transmitted to the CPU 111 through the EC 116. Subsequently, the CPU 111 having been informed of the fact that the magnitude of the acceleration becomes equal to or less than the predetermined value synchronizes data between the nonvolatile memory 203 and the hard disk 202. Also, the CPU 111 issues an instruction to the hard disk controller 201 in steps B4 and B5 to return to an operation mode using an access to the hard disk 202.

Thus, the computer 10 according to the second embodiment also can enable an access to the HDD 113 having been brought into a state, in which the hard disk 202 should be protected from vibrations and impacts, without reducing the vibration resistance and the impact resistance.

Incidentally, in the foregoing descriptions of the first and second embodiment, examples of the operation, in which the display panel position sensor 122 or the acceleration sensor 123 detects that the computer 10 is carried and that the computer 10 is in high danger of undergoing vibrations and impacts and in which thus the operation mode of the HDD 113 is changed from the first operation mode to the second operation mode, have been described. However, the technique of protecting a disk according to the invention is not limited thereto. Various other techniques can be applied to the information processing apparatus.

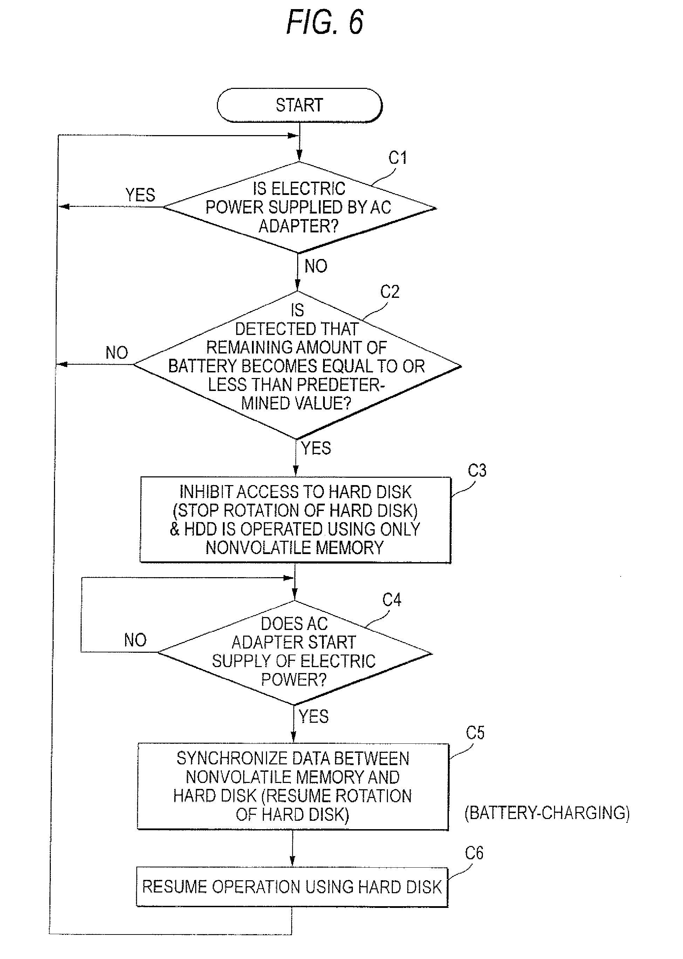

For example, an operation of writing data to the hard disk 202 and an operation of reading data from the hard disk 202 are performed using the mechanical drive mechanism including the spindle motor that rotates the hard disk 202, the head used to write and read data, and the actuator used to move the head, as described above. Therefore, as compared with the case of an access to a semiconductor memory, power consumption has to increase. Thus, for example, it is useful to achieve electric-power saving by changing the first operation mode of the HDD 113 to the second operation mode in a case where the remaining amount of the battery 119 is equal to or less than a reference value while the computer 10 is driven by electric power supplied from the battery 119. FIG. 6 is a flowchart illustrating the principle of the operation in this case.

If no electric power is supplied from the AC adapter 120 (NO in step Cl, and if the remaining amount of the battery 119 is equal to or less than a predetermined value (YES in step C2), the EC 116 generates an interruption and transmits a signal indicating these facts to the CPU 111. Then, the CPU 111 having been informed of the fact that the apparatus is driven by the battery 119, which is in a low-battery-state, inhibits an access to the hard disk 202, and issues an instruction to the hard disk controller 201 in step C3 to operate using only the nonvolatile memory 203.

If the AC adapter 120 starts the supply of electric power (YES in step C4), the EC 116 transmits a signal indicating this fact to the CPU 111. Then, the CPU 111 having been informed of the supply of electric power from an external power supply synchronizes data between the nonvolatile memory 203 and the hard disk 202 and issues an instruction to the hard disk controller 201 in steps C5 and C6 to return to the operation mode using an access to the hard disk 202.

When the AC adapter 120 starts the supply of electric power, the charging of the battery 119 is performed by the power supply circuit 118. Thus, when the supply of electric power from the AC adapter 120 is interrupted again, in a case where the remaining amount of the battery 119 is equal to or more than a predetermined value, the HDD 113 maintains the first operation mode. Conversely, in a case where the remaining amount of the battery 119 is less than a predetermined value, the operation mode of the HDD 113 is instantly changed to the second operation mode.

The remaining amount of the battery may be detected by the battery charge sensor (not shown).

Thus, the invention is not limited to the embodiments without modification. The invention can be implemented by modifying composite elements of embodiments without departing from the spirit and scope of the invention. Additionally, the invention can be variously implemented by appropriately combining a plurality of composite elements of the embodiments with one another, which are described in the foregoing description thereof. For example, some of the composite elements can be omitted among all the composite elements of the embodiments. Additionally, the composite elements, each of which is provided in different ones of the embodiments, can be appropriately combined with one another.

## Claims

1. An information processing apparatus comprising:
a main body;
a display panel rotatably attached to the main body between a close position in which the display panel covers the main body and an open position in which the display panel is risen relative to the main body;
a position sensor that detects a position of the display panel;
a disk drive that stores data input thereto, the storage comprising:
a nonvolatile memory that buffers the data input to the disk drive, and
a disc medium that stores the data buffered by the nonvolatile memory; and
a controller that sets the disk drive to:
a first mode in which an access to the disc medium is permitted when the position sensor detects that the display panel is in the open position, and
a second mode in which the access to the disc medium is inhibited and the nonvolatile memory temporary stores the data input to the disk drive when the position sensor detects that the display panel is in the close position.

2. The information processing apparatus according to claim 1, wherein:
the disc medium comprises a disk on which the data is written; and
the controller controls the disk to stop when the disk drive is set to the second mode.

3. The information processing apparatus according to claim 1, wherein the controller controls the disk drive to reflect the data that is temporally stored in the nonvolatile memory to the disc medium when the disk drive is set from the second mode to the first mode.

4. An information processing apparatus comprising:
an acceleration sensor that detects an acceleration;
a disk drive that stores data input thereto, the storage comprising:
a nonvolatile memory that buffers the data input to the disk drive, and
a disc medium that stores the data buffered by the nonvolatile memory; and
a controller that sets the disk drive to:
a first mode in which an access to the disc medium is permitted when the acceleration detected by the acceleration sensor is equal to or less than a predetermined value, and
a second mode in which the access to the disc medium is inhibited and the nonvolatile memory temporary stores the data input to the disk drive when the acceleration detected by the acceleration sensor exceeds the predetermined value.

5. The information processing apparatus according to claim 4, wherein:
the disc medium comprises a disk on which the data is written; and
the controller controls the disk to stop when the disk drive is set to the second mode.

6. The information processing apparatus according to claim 4, wherein the controller controls the disk drive to reflect the data that is temporally stored in the nonvolatile memory to the disc medium when the disk drive is set from the second mode to the first mode.

7. An information processing apparatus comprising:
a battery;
a charge sensor that detects a charged amount of the battery;
a disk drive that stores data input thereto, the storage comprising:
a nonvolatile memory that buffers the data input to the disk drive, and
a disc medium that stores the data buffered by the nonvolatile memory; and
a controller that sets the disk drive to:
a first mode in which an access to the disc medium is permitted when the charged amount detected by the charge sensor exceeds a predetermined value, and
a second mode in which the access to the disc medium is inhibited and the nonvolatile memory temporary stores the data input to the disk drive when the charged amount detected by the charge sensor is equal to or less than the predetermined value.

8. The information processing apparatus according to claim 7, wherein:
the disc medium comprises a disk on which the data is written; and
the controller controls the disk to stop when the disk drive is set to the second mode.

9. The information processing apparatus according to claim 7, wherein:
the charge sensor detects whether or not the battery is charged by an external power supply; and
the controller set the disk drive to the first mode when the charge sensor detects that the battery is charged by the external power supply.

10. The information processing apparatus according to claim 9, wherein the controller controls the disk drive to reflect the data that is temporally stored in the nonvolatile memory to the disc medium when the disk drive is set from the second mode to the first mode.
